# FASCICULE DE BREVET EUROPEEN

(11) **EP 1 535 840 B1**
(45) Date de publication et mention de la délivrance du brevet: **04.10.2006**
(21) Numéro de dépôt: 04292493.6
(22) Date de dépôt: 20.10.2004
(51) Int. Cl.: B64D 29/06

(54) **Ensemble pour aéronef comprenant un dispositif de montage d'un carénage disposé entre une entrée d'air d'un moteur d'aéronef et un mât**
Anordnung mit einer Befestigungsvorrichtung für eine Verkleidung zwischen einem Lufteinlass eines Flugzeugtriebwerkes und eines Pylons
Arrangement for aircraft comprising a device for mounting a fairing between a nacelle of an aircraft engine and a pylon

(30) Priorité: 22.10.2003 FR 0350715
(43) Date de publication de la demande: 01.06.2005
(73) Titulaire: AIRBUS France, 31060 Toulouse (FR)
(72) Inventeur: Beaufort, Jacques, 31700 Blagnac (FR)
(74) Mandataire: Ilgart, Jean-Christophe

(56) Documents cités:
- GB-A- 499 846

## Description

### DOMAINE TECHNIQUE

La présente invention se rapporte de façon générale à un aéronef comprenant au moins un moteur disposant d'une entrée d'air, chaque moteur étant fixé à un mât lui-même fixé à un élément de structure de cet aéronef, un carénage étant monté entre l'entrée d'air du moteur et le mât. A ce titre, il est noté que le carénage, également appelé « casquette » (de l'anglais « visor »), dispose d'une forme adaptée pour s'intégrer conjointement aux formes aérodynamiques du mât et de l'entrée d'air du moteur, et est classiquement prévu pour diminuer le désalignement rencontré entre cette entrée d'air et le mât du moteur concerné.

D'autre part, l'invention se rapporte également à un dispositif de montage d'un tel carénage.

### ETAT DE LA TECHNIQUE ANTERIEURE

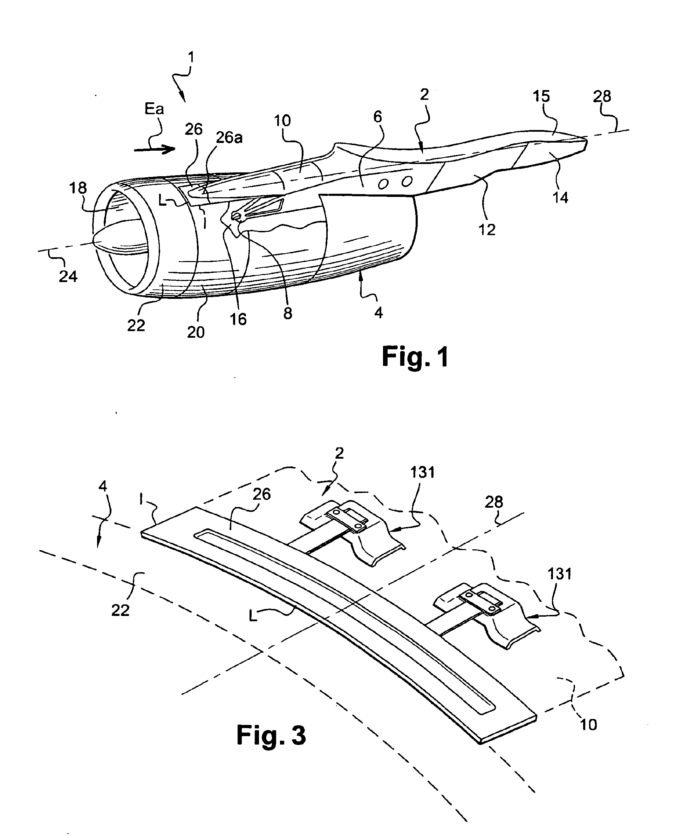

De façon connue et en référence à la figure 1 représentant un assemblage 1 pour aéronef disposant d'un mât 2 auquel est suspendu un moteur 4, le mât 2 d'un aéronef constitue une liaison entre ce même moteur 4 et un élément de structure de cet aéronef, tel que sa voilure ou son fuselage (non représenté). Il est précisé que sur cette figure 1, le mât 2 représenté est conçu de manière à être fixé sous l'une des ailes de l'aéronef.

Le mât 2 permet effectivement de transmettre à la structure de l'aéronef les efforts générés par le moteur, et autorise également le passage du carburant, de l'électricité, de l'hydraulique et de l'air, entre le moteur 4 et la structure de l'aéronef.

Par ailleurs, le mât 2 est habituellement conçu de manière à respecter différentes contraintes telles que celle relative à la nécessité de présenter une sécurité maximale, ou encore telles que l'obtention d'une traînée aérodynamique induite, d'une masse et d'un coût aussi faibles que possible.

Afin d'assurer la transmission des efforts générés par le moteur 4, le mât 2 comporte une structure principale et centrale 6 généralement dotée d'une ossature, par exemple en forme de caisson. A titre d'exemple illustratif, cette ossature peut comprendre des nervures et des panneaux, ainsi que des attaches au travers desquelles le mât 2 est fixé d'une part au moteur 4, et d'autre part à la structure de l'aéronef. Une attache 8 du mât 2 destinée à participer au maintien du moteur 4 est représentée sur la figure 1. Comme cela est clairement visible sur cette figure, dans le but d'assurer le mieux possible la transmission des efforts générés par le moteur 4, l'attache 8 est ancrée sur un carter central 16 du moteur 4. En d'autres termes, le mât 2 pénètre à l'intérieur du canal annulaire d'écoulement secondaire 18, formé entre le carter central 16 et la nacelle 20 qui l'entoure.

De manière classique, le mât 2 comporte également une structure secondaire avant 10 ainsi qu'une structure secondaire arrière 12, les termes « avant » et « arrière » se référant ici ainsi que dans la suite de la description au sens d'écoulement de l'air à travers le moteur 4, comme représenté par la flèche référencée Ea sur la figure 1.

De plus, dans le but de diminuer la traînée aérodynamique engendrée par ce mât 2 et plus particulièrement par son bord de fuite, celui-ci comporte un carénage arrière 14 raccordé à l'arrière de la structure secondaire arrière 12, et conçu pour constituer un prolongement aérodynamique 15 de l'extrados de la voilure à laquelle ce mât 2 est fixé.

Toujours de façon connue, les moteurs, en particulier ceux de grandes dimensions, sont sujets à d'importantes déflexions et déformations. Celles-ci proviennent effectivement d'une part des forces de réaction exercées sur les attaches du moteur suite à la mise en poussée de ce dernier, et d'autre part des moments externes appliqués par des charges aérodynamiques sur une entrée d'air 22 du moteur 4. Les déflexions principales observées durant le fonctionnement du moteur 4 sont engendrées par un moment de flexion, rencontré sous poussée élevée. Il est précisé que cette poussée élevée est la somme des forces internes dont la résultante agit suivant un axe principal longitudinal 24 du moteur 4. Ainsi, les attaches du moteur 4 réagissent à cette poussée et transmettent une force de réaction à la structure de l'aéronef. Néanmoins, il est précisé qu'en raison des diverses contraintes de montage, telles que celle de prévoir l'attache 8 sur le carter central 16 du moteur 4, cette force de réaction agit au-dessus de l'axe 24, ce qui génère la création du moment de flexion précité.

Comme mentionné précédemment, un carénage 26 est disposé entre le moteur 4 et le mât 2, et plus particulièrement entre l'entrée d'air 22 et la structure secondaire avant 10. Le carénage ou « casquette » 26 présente une forme adaptée pour s'intégrer conjointement aux formes aérodynamiques de la structure secondaire avant 10 et de l'entrée d'air 22, et est classiquement prévu pour diminuer le désalignement entre ces deux derniers éléments, ce désalignement étant par ailleurs accentué sous l'effet du moment de flexion lors de la mise en poussée de l'aéronef.

Toujours en référence à la figure 1, on voit un carénage 26, également dit « carénage aérodynamiquement intégré », de forme sensiblement complexe en ce sens qu'il présente une partie centrale 26a bombée, prévue pour assurer la continuité aérodynamique avec la structure secondaire avant 10 du mât 2. Cependant, il est indiqué que le carénage 26 peut se présenter sous une forme plus simple telle que celle d'un rectangle disposant d'une légère courbure pour pouvoir épouser correctement l'entrée d'air 22, ce carénage 26 pouvant par conséquent dans ce cas être assimilé à un simple secteur annulaire. En outre, de façon classique, une longueur courbe L de ce secteur annulaire se situe dans un plan (non représenté) sensiblement orthogonal à une direction principale longitudinale 28 du mât 2 qui est quant à elle sensiblement parallèle à l'axe principal longitudinal 24 du moteur 4, et dont la largeur droite 1 est sensiblement parallèle à cette direction principale longitudinale 28.

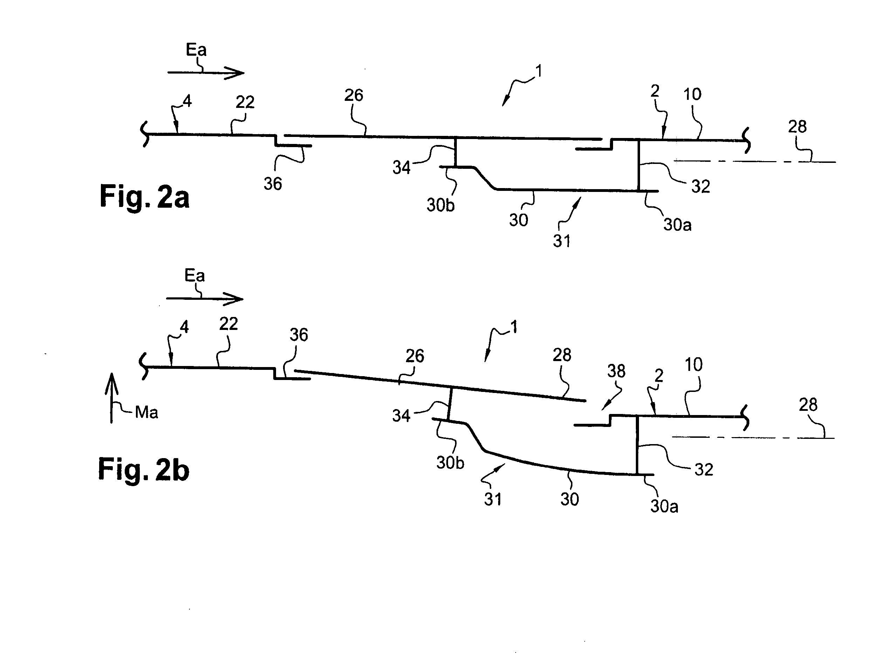

En référence à présent à la figure 2a, il est représenté schématiquement et partiellement l'assemblage 1 de la figure 1, ainsi qu'un schéma de principe d'un dispositif de montage 31 du carénage 26 selon une réalisation classique de l'art antérieur, lorsque le moteur 4 n'est pas soumis au moment de flexion indiqué ci-dessus.

Sur cette figure, on voit que la partie arrière du carénage 26 est reliée à la structure secondaire avant 10 du mât 2, notamment par l'intermédiaire de moyens flexibles 30 prenant la forme d'un ressort à lame ou d'un ressort à boudins s'étendant sensiblement parallèlement à la direction principale longitudinale 28 du mât 2. En effet, ces moyens flexibles 30, faisant partie intégrante du dispositif de montage 31 du carénage 26, comprennent une première extrémité 30a solidaire de premiers moyens de liaison 32 eux-mêmes solidaires de la structure secondaire avant 10, ainsi qu'une seconde extrémité 30b solidaire de seconds moyens de liaison 34 eux-mêmes solidaires du carénage 26.

De plus, la partie avant du carénage 26 est en appui contre une portion 36 de l'entrée d'air 22, cette portion 36 faisant saillie vers l'arrière et présentant un léger décrochement vers le bas afin de permettre une parfaite continuité aérodynamique entre les deux éléments 22 et 26. Il est noté que cette liberté de mouvement entre ces deux éléments 22 et 26 est prévue pour que le carénage 26 puisse suivre les déplacements de l'entrée d'air 22, et plus spécifiquement son mouvement ascensionnel engendré par le moment de flexion précité sous poussée élevée, comme cela sera exposé plus clairement ci-dessous. En outre, toujours lorsque le moteur 4 n'est pas soumis au moment de flexion indiqué ci-dessus, la partie arrière du carénage 26 est en appui contre la structure secondaire avant 10 du mât 2.

Avec un tel agencement, c'est en effet la force de rappel, générée par les moyens flexibles 30 montés de façon à être contraints même lorsque le moteur 4 n'est pas soumis au moment de flexion, qui plaque le carénage 26 contre l'entrée d'air 22 et le mât 2. Ceci provoque par conséquent, principalement en raison du contact entre le carénage 26 et l'entrée d'air 22, un réalignement permanent entre le mât 2 et cette même entrée d'air 22.

En référence à la figure 2b, sensiblement identique à la figure 2a à la différence que le moteur 4 est cette fois-ci soumis au moment de flexion précité, on peut voir que lorsque l'entrée d'air 22 est animée de son mouvement ascensionnel schématisé par la flèche Ma, le carénage 26 est en mesure de suivre ce dernier grâce à la déformation des moyens flexibles 30 du dispositif 31, qui génèrent alors une force de rappel encore plus importante que celle provoquée lorsque le moteur 4 n'est pas soumis au moment de flexion.

Néanmoins, on peut apercevoir sur cette figure 2b que le carénage 26 effectue non seulement un mouvement de rotation amenant la partie avant de ce carénage 26 en hauteur par rapport à sa partie arrière, mais effectue également un mouvement de translation vers le haut qui provoque un désaffleurement entre la partie arrière du carénage 26 et la structure secondaire avant 10 du mât 2, ce désaffleurement laissant alors apparaître une ouverture 38 ainsi qu'une discontinuité aérodynamique entre les deux éléments 26 et 10.

De plus, les forces de pression/dépression engendrées par l'écoulement aérodynamique ont tendance à provoquer un soulèvement de la partie avant libre du carénage 26. Ainsi, ce phénomène dit « d'écopage » se traduit directement par la création d'une traînée aérodynamique induite, sensiblement préjudiciable.

Naturellement, une augmentation de la raideur des moyens flexibles 30 permettrait de contrer ce phénomène, mais provoquerait en parallèle un contact d'intensité accrue entre la partie avant du carénage 26 et la portion 36 de l'entrée d'air 22, ce qui générerait alors une usure accélérée de la zone d'appui entre les deux éléments 26 et 36.

D'autre part, une augmentation trop importante de la raideur des moyens flexibles 30 pourrait empêcher la rotation du carénage 26, pourtant essentielle pour le suivi du moteur 4 dans son mouvement ascensionnel, et donc primordiale pour assurer le réalignement de l'entrée d'air 22 et du carénage 26.

Ainsi, il est clair que l'architecture proposée actuellement et décrite ci-dessus peut induire une traînée aérodynamique dans certaines phases de vol, préjudiciable à la performance globale de l'aéronef.

### EXPOSÉ DE L'INVENTION

L'invention a donc pour but de proposer un dispositif de montage d'un carénage disposé entre d'une part une entrée d'air d'un moteur d'aéronef et d'autre part un mât fixé audit moteur ainsi qu'à un élément de structure de cet aéronef, la conception de ce dispositif de montage permettant de remédier au moins partiellement aux inconvénients mentionnés ci-dessus relatifs aux réalisations de l'art antérieur.

Par ailleurs, l'invention a également pour but de présenter un aéronef pourvu d'au moins un dispositif de montage tel que celui répondant au but mentionné ci-dessus.

Pour ce faire, l'invention a pour objet un ensemble pour aéronef comprenant un mât destiné à être fixé à un élément de structure de l'aéronef, une entrée d'air d'un moteur dudit aéronef fixé au mât, un carénage disposé entre l' entrée d'air du moteur d'aéronef et le mât, et au moins un dispositif de montage du carénage, ledit dispositif comportant :
- des moyens flexibles contraints disposant d'une première extrémité ainsi que d'une seconde extrémité, ces moyens flexibles étant destinés à assurer un plaquage du carénage contre l'entrée d'air et le mât du moteur ;
- des premiers moyens de liaisons connectés d'une part à un élément pris parmi le groupe constitué du mât et de l'entrée d'air, et d'autre part à la première extrémité des moyens flexibles, ces premiers moyens de liaison étant conçus de sorte que la première extrémité des moyens flexibles soit solidaire de l'élément pris parmi le groupe constitué du mât et de l'entrée d'air ; et
- des seconds moyens de liaisons connectés d'une part au carénage et d'autre part à la seconde extrémité des moyens flexibles.

Selon l'invention, les seconds moyens de liaison comprennent un ensemble primaire solidaire du carénage ainsi qu'un ensemble secondaire solidaire de la seconde extrémité des moyens flexibles, et les ensembles primaire et secondaire sont reliés entre-eux à l'aide d'une liaison pivot.

Avantageusement, avec une telle configuration, le dispositif de montage selon l'invention permet au carénage de pivoter autour de la liaison pivot lorsque celui-ci suit le mouvement ascensionnel de l'entrée d'air, engendré par le moment de flexion rencontré sous poussée élevée du moteur associé.

De cette façon, la faculté offerte au carénage de pivoter librement permet à celui-ci de rester en contact non seulement avec l'entrée d'air lors d'un mouvement ascensionnel de ce dernier, mais également avec le mât, et plus particulièrement avec sa structure secondaire avant.

En effet, lors d'un mouvement ascensionnel de l'entrée d'air provoquant simultanément la déformation des moyens flexibles et le pivotement du carénage autour de la liaison pivot du dispositif de montage, le carénage se comporte approximativement comme s'il existait une simple liaison pivot entre la partie arrière du carénage et la structure secondaire avant du mât. Ainsi, la combinaison entre le mouvement de rotation et le mouvement de translation rencontrée avec le dispositif de montage de l'art antérieur décrit ci-dessus est ici sensiblement transformée en un unique mouvement de rotation, ne provoquant pas de désaffleurement entre la partie arrière du carénage et la structure secondaire avant du mât.

Cette spécificité permet alors de conserver une continuité aérodynamique entre l'entrée d'air et le mât, quelles que soient leurs positions relatives. De plus, cela participe par conséquent à réduire significativement la traînée aérodynamique induite par l'assemblage constitué de ce carénage ainsi que du mât et du moteur associés.

Selon un mode de réalisation préféré de la présente invention, les premiers moyens de liaison sont connectés au mât. Avec un tel agencement, on peut alors prévoir que la liaison pivot se situe à proximité d'une portion médiane du carénage, considérée selon une direction principale longitudinale du mât.

Pour ce faire, l'ensemble primaire des seconds moyens de liaison est constitué d'une unique pièce primaire fixée sur la portion médiane du carénage considérée selon la direction principale longitudinale dudit mât, et l'ensemble secondaire de ces seconds moyens de liaison est constitué d'une unique pièce secondaire reliée à la pièce primaire à l'aide de la liaison pivot.

En outre, la liaison pivot est de préférence réalisée par l'intermédiaire d'un axe de pivotement autour duquel peut pivoter chacune des pièces primaire et secondaire.

Par ailleurs et toujours dans ce même mode de réalisation préféré de la présente invention, les premiers moyens de liaison comprennent un socle maintenant fixement la première extrémité des moyens flexibles, ce socle étant fixé à une extrémité avant du mât. Par ailleurs, les premiers moyens de liaison peuvent également comprendre des moyens de mise en contrainte des moyens flexibles, ces moyens de mise en contrainte coopérant avec le socle.

Selon un autre mode de réalisation préféré de la présente invention, les premiers moyens de liaison sont connectés à l'entrée d'air.

De manière avantageuse, ce mode de réalisation préféré permet de supprimer totalement le risque d'écopage, à savoir le soulèvement de la partie avant du carénage, dans la mesure où l'écoulement aérodynamique a alors tendance à plaquer le carénage simultanément contre la structure secondaire avant du mât et contre l'entrée d'air du moteur.

Enfin, pour les deux modes de réalisation présentés ci-dessus, on peut prévoir que les moyens flexibles sont constitués d'une lame flexible s'étendant sensiblement parallèlement à une direction principale longitudinale du mât, ou encore d'une pluralité de lames flexibles superposées s'étendant sensiblement parallèlement à cette même direction principale longitudinale du mât.

D'autre part, l'invention a pour objet un aéronef comprenant au moins un ensemble tel que celui décrit ci-dessus.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1, déjà décrite, représente un assemblage de l'art antérieur pour aéronef, cet assemblage disposant d'un mât auquel est suspendu un moteur ;
- la figure 2a, déjà décrite, représente une vue schématique de principe d'un dispositif de montage d'un carénage selon une réalisation classique de l'art antérieur, lorsque le moteur n'est pas soumis au moment de flexion engendré par la mise en poussée de ce dernier ;
- la figure 2b, déjà décrite, représente une vue schématique de principe similaire à celle de la figure 2a, lorsque le moteur est soumis au moment de flexion engendré par la mise en poussée de ce dernier ;
- la figure 3 représente une vue en perspective de deux dispositifs de montage se présentant tous deux selon un mode de réalisation préféré de la présente invention, en association avec un carénage;
- la figure 4a représente une vue schématique de principe d'un dispositif de montage de la figure 3, lorsque le moteur n'est pas soumis au moment de flexion engendré par la mise en poussée de ce dernier ;
- la figure 4b représente une vue schématique de principe similaire à celle de la figure 4a, lorsque le moteur est soumis au moment de flexion engendré par la mise en poussée de ce dernier ;
- la figure 5 représente une vue partielle en coupe longitudinale plus détaillée d'un dispositif de montage de la figure 3, lorsque le moteur n'est pas soumis au moment de flexion engendré par la mise en poussée de ce dernier,
- la figure 6a représente une vue schématique de principe d'un dispositif de montage selon un autre mode de réalisation préféré de la présente invention, lorsque le moteur n'est pas soumis au moment de flexion engendré par la mise en poussée de ce dernier ; et
- la figure 6b représente une vue schématique de principe similaire à celle de la figure 6a, lorsque le moteur est soumis au moment de flexion engendré par la mise en poussée de ce dernier.

### EXPOSÉ DÉTAILLÉ DE MODES DE RÉALISATION PRÉFÉRÉS

L'invention concerne tout d'abord un aéronef (non représenté), comprenant au moins un assemblage 1 similaire à celui décrit dans l'art antérieur et représenté sur la figure 1, et comportant de préférence un ou deux de ces assemblages 1 sous chacune des ses deux ailes. A ce titre, il est indiqué que sur les figures 1 à 6b, les éléments portant les mêmes références numériques correspondent à des éléments identiques ou similaires.

Dans l'invention, l'assemblage 1 n'est plus muni d'un ou plusieurs dispositif de montage 31 du carénage 26, mais d'un ou plusieurs dispositif de montage 131 qui vont être exposés en détails ci-après, et qui sont également objet de la présente invention.

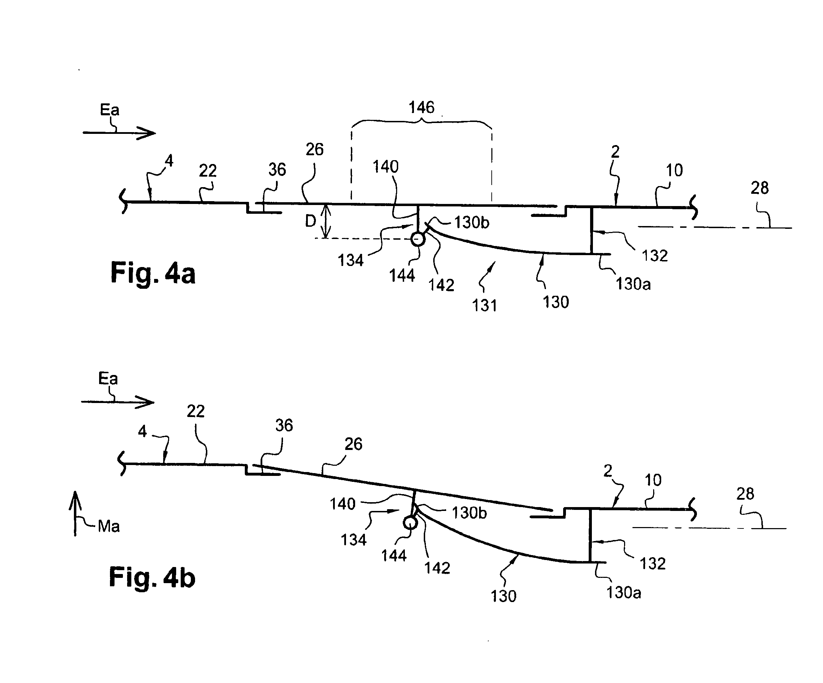

En référence à la figure 3, il est représenté partiellement l'assemblage 1 de la figure 1, disposant de deux dispositifs de montage 131 sensiblement identiques se présentant tous deux selon un mode de réalisation préféré de la présente invention.

Comme on peut le voir sur cette figure 3, les deux dispositifs de montage 131 sont disposés de part et d'autre de la direction principale longitudinale 28 du mât 2, et coopèrent avec le carénage 26 qui dispose ici d'une forme de rectangle dépourvue de partie centrale bombée, mais qui présente une légère courbure pour pouvoir épouser correctement l'entrée d'air 22. Ainsi, le carénage 26 peut donc être assimilé à un secteur annulaire. Comme indiqué précédemment, la longueur courbe L de ce secteur annulaire se situe dans un plan (non représenté) sensiblement orthogonal à la direction principale longitudinale 28 du mât 2, et la largeur droite 1 est sensiblement parallèle à cette même direction principale longitudinale 28.

Naturellement, les assemblages 1 de l'aéronef selon l'invention pourraient comporter un nombre supérieur ou inférieur de dispositifs de montage 131, sans sortir du cadre de l'invention. De plus, il est bien entendu précisé que leurs emplacements par rapport au carénage 26 et au mât 2 peuvent être adaptés en fonction des contraintes rencontrées.

En référence à la figure 4a, il est représenté schématiquement l'un des dispositifs de montage 131 de la figure 3, lorsque le moteur 4 n'est pas soumis au moment de flexion engendré par la mise en poussée de ce dernier.

Sur cette figure 4a, on peut apercevoir que le dispositif 131 comporte des moyens flexibles 130 prenant la forme d'un ressort à lame ou d'un ressort à boudins s'étendant sensiblement parallèlement à la direction principale longitudinale 28 du mât 2. Pour limiter le désalignement entre l'entrée d'air 22 et le mât 2, les moyens flexibles 130 sont contraints en permanence, même lorsque cette entrée 22 n'est pas soumis au moment de flexion, ce qui explique leur forme légèrement incurvée vers le bas représentée sur cette figure 4a.

Les moyens flexibles 130 comprennent une première extrémité 130a solidaire de premiers moyens de liaison 132 eux-mêmes solidaires de la structure secondaire avant 10 du mât 2, ainsi qu'une seconde extrémité 130b solidaire de seconds moyens de liaison 134 eux-mêmes solidaires du carénage 26.

La particularité de ce dispositif de montage 131 du carénage 26 réside dans le fait que les seconds moyens de liaison 134 disposent d'un ensemble primaire 140 solidaire du carénage 26, ainsi que d'un ensemble secondaire 142 solidaire de la seconde extrémité 130b des moyens flexibles 130, et que les ensembles primaire et secondaire 140 et 142 sont reliés entre-eux à l'aide d'une liaison pivot 144.

Par conséquent, comme représenté sur la figure 4b, lorsque l'entrée d'air 22 est animée de son mouvement ascensionnel schématisé par la flèche Ma et provoqué par le moment de flexion s'exerçant sur le moteur 4, le carénage 26 est en mesure de suivre ce dernier grâce à la déformation des moyens flexibles 130 du dispositif 131. De façon simultanée, le carénage 26 pivote autour de la liaison pivot 144 et conserve ainsi un contact permanent avec la structure secondaire avant 10 du mât 2.

Bien entendu, la liaison pivot 144 est agencée de manière à permettre le fonctionnement décrit ci-dessus, à savoir d'engendrer un contact permanent entre le carénage 26 et le mât 2. En d'autres termes, cette liaison pivot 144 pourrait être présentée comme étant agencée de sorte que son axe soit sensiblement parallèle à un axe selon lequel s'exerce le moment de flexion appliqué au moteur 4, ou encore que son axe soit sensiblement orthogonal à un plan vertical passant par la direction principale longitudinale 28 du mât 2, lorsque l'aéronef se trouve au sol. A titre indicatif, le mât 2 étant fixé sur une extrémité supérieure du moteur 4, le plan vertical précité serait donc sensiblement confondu avec un plan vertical coupant diamétralement et longitudinalement le moteur 4.

En référence conjointement aux figures 4a et 4b, on peut voir que la liaison pivot 144 se situe à proximité d'une portion médiane 146 du carénage 26, considérée selon la direction principale longitudinale 28 du mât 2. En d'autres termes, la liaison pivot 144 est agencée au-dessous et dans le prolongement vertical de cette portion médiane 146, qui à titre d'exemple illustratif, peut représenter la moitié de la largeur droite 1 (non référencée sur cette figure) du carénage 26 en forme de secteur annulaire. De plus, toujours à titre d'exemple illustratif, on peut prévoir que la distance verticale D entre la portion médiane 146 et la liaison pivot 144 correspond approximativement à un quart de la largeur droite 1 du carénage 26 en forme de secteur annulaire.

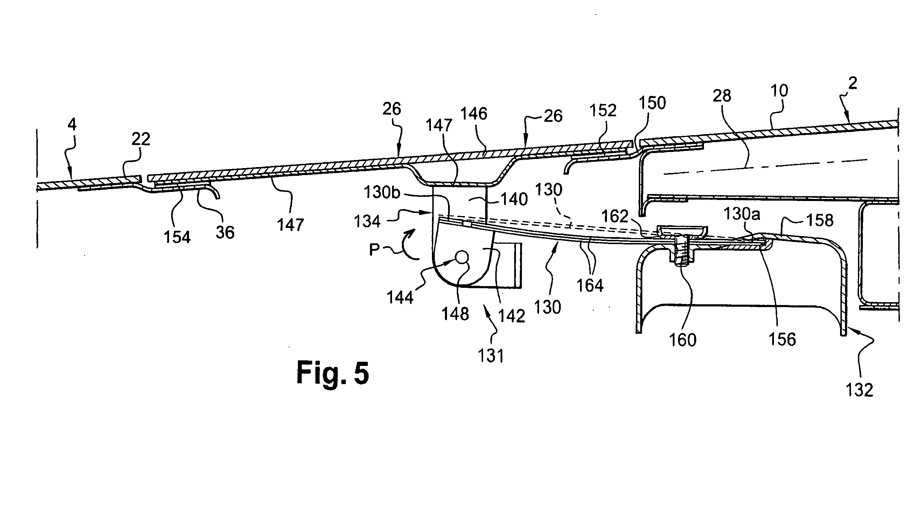

En référence à présent à la figure 5 représentant le dispositif de montage 131 de façon plus détaillée, on peut tout d'abord voir que l'ensemble primaire 140 des seconds moyens de liaison 134 est constitué d'une unique pièce primaire fixée au-dessous de la portion médiane 146 du carénage 26, sur un renfort 147 solidaire de ce dernier. Sans sortir du cadre de l'invention, il serait également possible de prévoir que l'unique pièce primaire 140 soit directement fixée sur la portion médiane 146 du carénage 26.

De plus, l'ensemble secondaire 142 de ces seconds moyens de liaison 134 est constitué d'une unique pièce secondaire reliée à la pièce primaire 140 à l'aide de la liaison pivot 144, celle-ci prenant la forme d'un axe de pivotement 148 autour duquel peut pivoter chacune de ces pièces primaire et secondaire 140 et 142.

Naturellement, l'axe de pivotement 148 pourrait être solidaire de l'une des deux pièces primaire et secondaire 140 et 142, l'autre de ces pièces 140 et 142 étant alors capable de tourner autour de ce même axe 148.

En outre, dans l'état représenté sur cette figure 5 où le moteur 4 n'est pas soumis au moment de flexion, la partie avant du carénage 26 est plaquée contre la portion 36 de l'entrée d'air 22, cette portion 36 faisant saillie vers l'arrière et présentant un léger décrochement vers le bas afin de permettre une parfaite continuité aérodynamique entre les deux éléments 22 et 26. Néanmoins, il serait également possible de prévoir une partie avant du carénage 26 suffisamment effilée pour qu'elle soit en mesure de reposer directement sur la surface extérieure de l'entrée d'air 22, sans que cela ne provoque de traînée aérodynamique significative. Dans un tel cas, la portion 36 pourrait alors être supprimée, et l'assemblage sensiblement simplifié.

De plus, la partie arrière du carénage 26 est quant à elle plaquée contre une portion 150 de la structure secondaire avant 10, cette portion 150 faisant saillie vers l'avant et présentant un léger décrochement vers le bas afin de permettre une parfaite continuité aérodynamique entre les deux éléments 10 et 26.

Dans le but de diminuer l'usure des portions 36 et 150 ainsi que celle des parties avant et arrière du carénage 26, il est de préférence prévu des appuis en Téflon 152 et 154, respectivement agencés entre la partie arrière du carénage 26 et la portion 150, et entre la partie avant du carénage 26 et la portion 36. Bien entendu, ces deux appuis en Téflon 152 et 154 se présentant sous forme de plaquettes peuvent indifféremment être solidaires des portions 36,150, ou du carénage 26.

Comme cela a été mentionné ci-dessus, il est noté que le carénage 26 est plaqué contre le moteur 4 et le mât 2 à l'aide de la force de rappel générée par les moyens flexibles 130, qui sont contraints même lorsque le moteur 4 n'est pas soumis au moment de flexion. C'est la raison pour laquelle ces moyens de flexion 130 sont représentés de façon légèrement incurvée vers le bas sur la figure 5.

Néanmoins, pour faciliter le montage de ces moyens flexibles 130, la seconde extrémité 130b de ces derniers est tout d'abord fixée solidairement à la pièce secondaire 142, par exemple à l'aide d'une simple vis.

Ensuite, la première extrémité 130a de ces moyens flexibles 130 est introduite à l'intérieur d'un logement 156 prévu sur un socle 158 appartenant aux premiers moyens de liaison 132, ce socle 158 étant fixé solidairement à une extrémité avant de la structure secondaire avant 10 du mât 2.

Une fois ces opérations effectuées, les moyens flexibles 130 sont en butée à l'intérieur du logement 156, mais ne sont pas encore contraints. A ce titre, il est noté que cet état de prémontage des moyens flexibles 130 est représenté en pointillés sur la figure 5, ces mêmes moyens 130 adoptant alors une forme sensiblement droite symbolisant l'absence de contrainte.

Les premiers moyens de liaison 132 comprennent en outre des moyens de mise en contrainte des moyens flexibles 130, ces moyens de mise en contrainte pouvant par exemple prendre la forme d'une ou plusieurs vis 160 montées sur le socle 158 et étant associées à une plaque d'appui 162. En effet, comme cela est clairement représenté sur la figure 5, le vissage vers le bas des vis 160 dans le socle 158 entraîne un déplacement également vertical vers le bas de la plaque d'appui 162, qui pousse alors sur les moyens flexibles 130 aux deux extrémités 130a et 130b respectivement bloquées dans le logement 156 et sur la pièce secondaire 142. De cette façon,. lors du vissage des vis 160, la pièce secondaire 142 solidaire de la seconde extrémité 130b pivote légèrement autour de l'axe de pivotement 148 dans le sens des aiguilles d'une montre tel que représenté par la flèche P, et les moyens flexibles 130 s'incurvent donc progressivement vers le bas en développant une force de rappel assurant le plaquage du carénage 26 sur les portions 36 et 150. Il est précisé qu'une fois le vissage des vis 160 achevé, les moyens flexibles 130 sont maintenus fixement par serrage entre le socle 158 et la plaque d'appui 162.

Pour des raisons de sécurité, il est de préférence prévu que les moyens flexibles 130 soient constitués d'une pluralité de lames flexibles 164 superposées dans le sens de la hauteur, et s'étendant donc chacune sensiblement parallèlement à la direction principale longitudinale 28 du mât 2.

A titre d'exemple illustratif et comme représenté sur la figure 5, les moyens flexibles 130 sont constitués de deux lames flexibles 164 identiques et superposées, ces lames 164 étant de préférence du type ressort à lame.

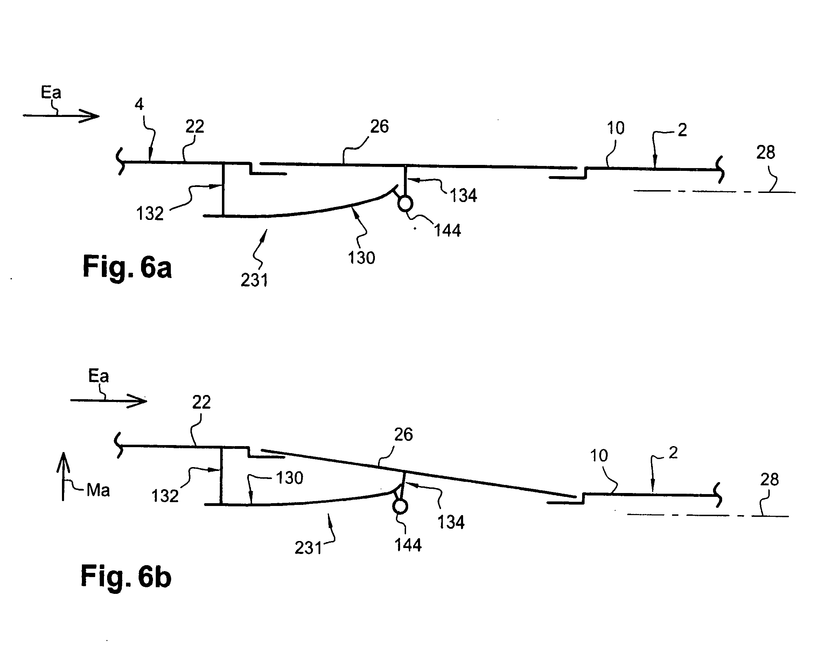

En référence conjointement aux figures 6a et 6b, on peut voir un dispositif de montage 231 du carénage 26, selon un autre mode de réalisation préféré de la présente invention. Bien entendu, ce dispositif de montage 231 est susceptible d'équiper les assemblages 1 de l'aéronef selon l'invention, au même titre que le dispositif de montage 131 décrit ci-dessus.

Dans cet autre mode de réalisation préféré, les seconds moyens de liaison 134 sont toujours solidaires du carénage 26, tandis que les premiers moyens de liaison 132 ne sont plus rattachés au mât 2, mais solidarisés à une extrémité arrière de l'entrée d'air 22 du moteur 4.

Lorsque le moteur 4 passe d'une position où il n'est pas soumis au moment de flexion indiqué ci-dessus comme représenté sur la figure 6a, à une position dans laquelle il est justement soumis à ce même moment de flexion comme représenté sur la figure 6b, le carénage 26 garde bien évidemment le contact avec l'entrée d'air 22 auquel il est rattaché à l'aide des moyens flexibles 130, mais reste également en contact avec le mât 2.

Cela est dû au fait que lorsque l'entrée d'air 22 est animé de son mouvement ascensionnel représenté schématiquement par la flèche Ma, le carénage 26 est également soumis au même mouvement, mais sa partie arrière pivote vers le bas autour de la liaison pivot 144 sous l'effet de la force de rappel des moyens flexibles 130.

Il est précisé que contrairement au mode de réalisation préféré décrit précédemment, les moyens flexibles 130 sont plus contraints lorsque le moteur 4 n'est pas soumis au moment de flexion que lorsqu'il y est précisément soumis, cette particularité assurant un contact permanent entre la partie arrière du carénage 26 et la structure secondaire avant 10 du mât 2. En d'autres termes, le mouvement ascensionnel Ma tend à faire diminuer la force de rappel générée par les moyens flexibles 130, même si celle-ci reste toujours suffisante pour entraîner un plaquage du carénage 26 contre le mât 2, quelles que soient les positions relatives de ce dernier et de l'entrée d'air 22.

Le dispositif de montage 231 est avantageux en ce sens qu'il permet de supprimer totalement le risque d'écopage, dans la mesure où l'écoulement aérodynamique a tendance à plaquer le carénage 26 simultanément contre la structure secondaire avant 10 du mât 2, et contre l'extrémité arrière de l'entrée d'air 22.

Ainsi, ici encore, le carénage 26 se comporte approximativement comme s'il existait une simple liaison pivot entre la partie arrière de ce carénage 26 et la structure secondaire avant 10 du mât 2.

Bien entendu, diverses modifications peuvent être apportées par l'homme du métier à l'aéronef et aux dispositifs de montage 131 et 231 du carénage 26 qui viennent d'être décrits, uniquement à titre d'exemples non limitatifs.

## Revendications

1. Ensemble pour aéronef comprenant un mât (2) destiné à être fixé à un élément de structure de l'aéronef, une entrée d'air (22) d'un moteur (4) dudit aéronef fixé au mât (2), un carénage (26) disposé entre le mât (2) et l'entrée d'air (22), et au moins un dispositif de montage (131, 231) du carénage (26), ledit dispositif (131, 231) comportant :
- des moyens flexibles contraints (130) disposant d'une première extrémité (130a) ainsi que d'une seconde extrémité (130b), lesdits moyens flexibles (130) étant destinés à assurer un plaquage du carénage (26) contre l'entrée d'air (22) du moteur (4) et le mât (2) ;
- des premiers moyens de liaisons (132) connectés d'une part à un élément pris parmi le groupe constitué du mât (2) et de l'entrée d'air (22), et d'autre part à la première extrémité (130a) des moyens flexibles (130), ces premiers moyens de liaison (132) étant conçus de sorte que la première extrémité (130a) des moyens flexibles (130) soit solidaire dudit élément pris parmi le groupe constitué du mât (2) et de l'entrée d'air (22) ; et
- des seconds moyens de liaisons (134) connectés d'une part au carénage (26) et d'autre part à la seconde extrémité (130b) des moyens flexibles (130),
**caractérisé en ce que** les seconds moyens de liaison (134) comprennent un ensemble primaire (140) solidaire du carénage (26) ainsi qu'un ensemble secondaire (142) solidaire de la seconde extrémité (130b) des moyens flexibles (130), et **en ce que** les ensembles primaire et secondaire (140,142) sont reliés entre-eux à l'aide d'une liaison pivot (144).

2. Ensemble selon la revendication 1, **caractérisé en ce que** les premiers moyens de liaison (132) sont connectés audit mât (2).

3. Ensemble selon la revendication 2, **caractérisé en ce que** la liaison pivot (144) se situe à proximité d'une portion médiane (146) du carénage (26), considérée selon une direction principale longitudinale (28) dudit mât (2).

4. Ensemble selon la revendication 3, **caractérisé en ce que** l'ensemble primaire (140) des seconds moyens de liaison (134) est constitué d'une unique pièce primaire fixée sur ladite portion médiane (146) du carénage (26) considérée selon la direction principale longitudinale (28) dudit mât (2), et **en ce que** l'ensemble secondaire (142) de ces seconds moyens de liaison (134) est constitué d'une unique pièce secondaire reliée à la pièce primaire à l'aide de ladite liaison pivot (144).

5. Ensemble selon la revendication 4, **caractérisé en ce que** la liaison pivot (144) est réalisée par l'intermédiaire d'un axe de pivotement (148) autour duquel peut pivoter chacune des pièces primaire et secondaire.

6. Ensemble selon l'une quelconque des revendications 2 à 5, **caractérisé en ce que** les premiers moyens de liaison (132) comprennent un socle (158) maintenant fixement la première extrémité (130a) des moyens flexibles (130), ledit socle (158) étant fixé à une extrémité avant dudit mât (2).

7. Ensemble selon la revendication 6, **caractérisé en ce que** les premiers moyens de liaison (132) comprennent également des moyens de mise en contrainte (160,162) des moyens flexibles (130), ces moyens de mise en contrainte (160,162) coopérant avec ledit socle (158).

8. Ensemble selon la revendication 1, **caractérisé en ce que** les premiers moyens de liaisons (132) sont connectés à ladite entrée d'air (22) du moteur (4).

9. Ensemble selon l'une quelconque des revendications précédentes, **caractérisé en ce que** les moyens flexibles (130) sont constitués d'une lame flexible (164) s'étendant sensiblement parallèlement à une direction principale longitudinale (28) dudit mât (2).

10. Ensemble selon l'une quelconque des revendications 1 à 8, **caractérisé en ce que** les moyens flexibles (130) sont constitués d'une pluralité de lames flexibles superposées (164) s'étendant sensiblement parallèlement à une direction principale longitudinale (28) dudit mât (2).

11. Aéronef comprenant au moins un ensemble selon l'une quelconque des revendications précédentes.

## Claims

1. Assembly for an aircraft comprising a pylon (2) for fixing to a structural element of the aircraft, an air intake (22) of an engine (4) of said aircraft fixed to the pylon (2), a shroud (26) positioned between the pylon (2) and the air intake (22), and at least one device (131, 231) for installing the shroud (26), said device (131, 231) comprising:
- stressed flexible means (130) provided with a first end (130a) and a second end (130b), said flexible means (130) being designed to force the shroud (26) into contact with the air intake (22) of the engine (4) and pylon (2) ;
- first connection means (132) connected firstly to one of the elements among the group composed of the pylon (2) and the air intake (22), and secondly to the first end (130a) of the flexible means (130), these first connection means (132) being designed such that the first end (130a) of the flexible means (130) is fixed to said one of the elements among the group composed of the pylon (2) and the air intake (22); and
- second connection means (134) connected firstly to the shroud (26) and secondly to the second end (130b) of the flexible means (130),
**characterized in that** the second connection means (134) comprise a primary assembly (140) fixed to the shroud (26) and a secondary assembly (142) fixed to the second end (130b) of the flexible means (130), and **in that** the primary and secondary assemblies (140, 142) are connected to each other through a pivot connection (144).

2. Assembly according to claim 1, **characterized in that** the first connection means (132) are connected to said pylon (2).

3. Assembly according to claim 2, **characterized in that** the pivot connection (144) is close to a median portion (146) of the shroud (26), considered along a longitudinal principal direction (28) of said pylon (2).

4. Assembly according to claim 3, **characterized in that** the primary assembly (140) of the second connection means (134) is composed of a single primary part fixed to the said median portion (146) of the shroud (26) considered along the longitudinal principal direction (28) of the said pylon (2), and **in that** the secondary assembly (142) of these second connection means (134) is composed of a single secondary part connected to the primary part through said pivot connection (144).

5. Assembly according to claim 4, **characterized in that** the pivot connection (144) is made through a pivot axis (148) about which each of the primary and secondary parts can pivot.

6. Assembly according to any one of claims 2 to 5, **characterized in that** the first connection means (132) comprise a base (158) that keeps the first end (130a) of the flexible means (130) fixed, the said base (158) being fixed to a forward end of said pylon (2).

7. Assembly according to claim 6, **characterized in that** the first connection means (132) also include means of applying stress (160, 162) to flexible means (130), these means of applying stress (160, 162) cooperating with said base (158) .

8. Assembly according to claim 1, **characterized in that** the first connection means (132) are connected to said engine (4) air intake (22).

9. Assembly according to any one of the above claims, **characterized in that** the flexible means (130) are composed of a flexible strip (164) extending approximately parallel to a longitudinal principal direction (28) of said pylon (2).

10. Assembly according to any one of claims 1 to 8, **characterized in that** the flexible means (130) are composed of several superposed flexible strips (164) extending approximately parallel to a principal longitudinal direction (28) of said pylon (2).

11. Aircraft comprising at least one assembly according to any one of the preceding claims.

## Patentansprüche

1. Anordnung für ein Luftfahrzeug mit einem Mast (2), der an einem Strukturelement des Luftfahrzeugs zu befestigen ist, einem Lufteintritt (22) eines Motors (4) des Luftfahrzeugs, der am Mast (2) befestigt ist, einer Verkleidung (26), die zwischen dem Mast (2) und dem Lufteintritt (22) angeordnet ist, sowie mindestens einer Montagevorrichtung (131,231) der Verkleidung (26), wobei die Vorrichtung (131,231) umfasst:
- vorbelastete, flexible Mittel (130), die ein erstes Ende (130a) sowie ein zweites Ende (130b) aufweisen, wobei die flexiblen Mittel (130) dazu bestimmt sind, die Verkleidung (26) an dem Lufteintritt (22) des Triebwerks (4) und dem Mast (2) anliegen zu lassen,
- erste Verbindungsmittel (132), die einerseits mit einem Element, das aus der aus dem Mast (2) und dem Lufteintritt (22) gebildeten Gruppe gewählt ist, und andererseits mit dem ersten Ende (130a) der flexiblen Mittel (130) verbunden ist, wobei diese ersten Verbindungsmittel (132) derart gestaltet sind, dass das erste Ende (130a) der flexiblen Mittel (130) mit dem Element einstückig ist, das aus der aus dem Mast (2) und dem Lufteintritt (22) gebildeten Gruppe gewählt ist, und
- zweite Verbindungsmittel (134), die einerseits mit der Verkleidung (26) und andererseits mit dem zweiten Ende (130b) der flexiblen Mittel (130) verbunden sind,
**dadurch gekennzeichnet, dass** die zweiten Verbindungsmittel (134) eine mit der Verkleidung (26) einstückige Primäreinheit (140) und eine mit dem zweiten Ende (130b) der flexiblen Mittel (130) einstückige Sekundäreinheit (142) umfassen, und dass die Primär- und Sekundäreinheiten (140,142) untereinander mittels einer Gelenkverbindung (144) verbunden sind.

2. Anordnung nach Anspruch 1, **dadurch gekennzeichnet, dass** die ersten Verbindungsmittel (132) mit dem Mast (2) verbunden sind.

3. Anordnung nach Anspruch 2, **dadurch gekennzeichnet, dass** die Gelenkverbindung (144) sich in Nähe eines Mittelabschnitts (146) der Verkleidung (26), in einer Haupt-Longitudinalrichtung (28) des Masts (2) betrachtet, befindet.

4. Anordnung nach Anspruch 3, **dadurch gekennzeichnet, dass** die Primäreinheit (140) der zweiten Verbindungsmittel (134) aus einem einzelnen Primärteil gebildet ist, welcher an dem Mittelabschnitt (146) der Verkleidung (26), in einer Haupt-Longitudinalrichtung (28) des Masts (2) betrachtet, befestigt ist, und dass die Sekundäreinheit (142) dieser zweiten Verbindungsmittel (134) aus einem einzelnen Sekundärteil gebildet ist, das mit dem Primärteil mit Hilfe der Gelenkverbindung (144) verbunden ist.

5. Anordnung nach Anspruch 4, **dadurch gekennzeichnet, dass** die Gelenkverbindung (144) mittels einer Dreh-Schwenkachse (148) realisiert ist, um die herum jedes der Primär- und Sekundärteile drehen/schwenken kann.

6. Anordnung nach einem der Ansprüche 2 bis 5, **dadurch gekennzeichnet, dass** die ersten Verbindungsmittel (132) einen Sockel (158) aufweisen, der das erste Ende (130a) der flexiblen Mittel (130) festhält, wobei der Sockel (158) an einem Vorderende des Masts (2) befestigt ist.

7. Anordnung nach Anspruch 6, **dadurch gekennzeichnet, dass** die ersten Verbindungsmittel (132) auch Vorbelastungsmittel (160,162) der flexiblen Mittel (130) umfassen, wobei diese Vorbelastungsmittel (160,162) mit dem Sockel (158) zusammenwirken.

8. Anordnung nach Anspruch 1, **dadurch gekennzeichnet, dass** die ersten Verbindungsmittel (132) mit dem Lufteintritt (22) des Triebwerks (4) verbunden sind.

9. Anordnung nach einem der vorangehenden Ansprüche, **dadurch gekennzeichnet, dass** die flexiblen Mittel (130) aus einer flexiblen Lamelle (164) gebildet sind, die sich im wesentlichen parallel zu einer Haupt-Longitudinalrichtung (28) des Masts (2) erstreckt.

10. Anordnung nach einem der Ansprüche 1 bis 8, **dadurch gekennzeichnet, dass** die flexiblen Mittel (130) aus mehreren flexiblen, übereinandergelagerten Lamellen (164) gebildet sind, die sich im wesentlichen parallel zu einer Haupt-Longitudinalrichtung (28) des Masts (2) erstrecken.

11. Luftfahrzeug mit mindestens einer Anordnung gemäß einem der vorangehenden Ansprüche.
